# DEMANDE DE BREVET EUROPEEN

(11) **EP 1 570 775 A2**
(43) Date de publication de la demande: **07.09.2005**
(21) Numéro de dépôt: 05354011.8
(22) Date de dépôt: 02.03.2005
(51) Int. Cl.: A47J 36/30

(54) **Dispositif autonome de chauffage d'un liquide et procédé de chauffage d'un liquide**

(30) Priorité: 04.03.2004 FR 0402260
(71) Demandeur: Godet, Claude, 38330 Saint Nazaire Les Eymes (FR); Tantolin, Christian, 38660 Lumbin (FR)
(72) Inventeur: Godet, Claude, 38330 Saint Nazaire Les Eymes (FR); Tantolin, Christian, 38660 Lumbin (FR)
(74) Mandataire: Jouvray, Marie-Andrée

(57) **Abrégé**

Un dispositif de chauffage d'un liquide comporte :
- un récipient (1) muni d'au moins une ouverture (5),
- une source de chaleur (6) comportant une enveloppe (7) contenant un produit chauffant dans lequel est plongé un élément thermiquement conducteur (13) comportant une partie externe en saillie (13a),
- des moyens d'actionnement (11) destinés à initier une réaction exothermique du produit chauffant,
- et des moyens de fixation de la source de chaleur (6) sur l'ouverture (5) du récipient (1) permettant d'introduire la partie externe (13a) de l'élément thermiquement conducteur (13) dans le récipient (1).

Le chauffage du liquide est, par exemple, obtenu en fixant de manière étanche la source de chaleur (6) sur l'ouverture (5), en retournant le dispositif de chauffage et en déclenchant les moyens d'actionnement (11).

## Description

### Domaine technique de l'invention

L'invention concerne un dispositif de chauffage d'un liquide comportant :
- un récipient muni d'au moins une ouverture et contenant ledit liquide,
- une source de chaleur comportant une enveloppe contenant un produit chauffant,
- des moyens de fixation de la source de chaleur sur l'ouverture du récipient
- et des moyens d'actionnement destinés à initier une réaction exothermique du produit chauffant.

L'invention concerne également un procédé de chauffage d'un liquide au moyen d'un tel dispositif de chauffage, plus particulièrement lorsque le récipient ne comporte qu'une seule ouverture.

### État de la technique

Pour réaliser des systèmes de chauffage autonomes, il a été proposé d'appliquer une source de chaleur autonome sur la paroi externe d'un récipient de manière à chauffer le contenu du récipient. Ainsi, le document FR-A-2712187 décrit un biberon auto-chauffant comprenant un biberon et une partie chauffante dans laquelle le biberon peut se loger et comportant un espace étanche rempli d'un produit de chauffage pouvant se régénérer, par exemple une solution aqueuse d'un sel maintenu à l'état de surfusion. Un dispositif de déclenchement du chauffage est disposé sur une paroi extérieure de la partie chauffante de manière à déclencher une réaction exothermique du produit de chauffage et à chauffer le contenu du biberon lorsque la paroi de celui-ci est mise en contact avec la partie chauffante. Ce type de chauffage, via les parois du récipient, présente cependant, l'inconvénient d'être lent et inhomogène.

Dans le document EP-A1-1129655, il a été proposé de réaliser le chauffage instantané d'un liquide grâce à un caloduc. Le dispositif comporte un récipient muni, dans sa partie supérieure, d'un goulot et un compartiment chauffant disposé sous le récipient. Le compartiment chauffant est relié à un réservoir de combustible de manière à produire une flamme assurant, par contact, le chauffage d'une partie d'un caloduc disposée dans le compartiment chauffant tandis qu'une autre partie du caloduc est installée dans le récipient. Le caloduc permet, ainsi, de transférer la chaleur produite dans le compartiment chauffant au liquide contenu dans le récipient. Un tel dispositif n'est, cependant, pas pratique à mettre en oeuvre et peut s'avérer dangereux. En effet, l'emploi de combustible, tel que le propane liquide ou le butane, ainsi que le chauffage par production d'une flamme ne sont pas appropriés à des utilisations de type portable. De plus, la source de chauffage consommant du combustible lors de chaque utilisation, elle doit être assez souvent réapprovisionnée en combustible. Or, le réapprovisionnement peut s'avérer peu pratique à mettre en oeuvre mais également être une source de danger. Par ailleurs, le caloduc étant disposé de manière permanente dans le récipient, le volume utile de liquide dans le récipient s'en trouve réduit.

Il a été proposé, dans la demande de brevet EP-A-0130757, de chauffer le liquide contenu dans une gourde en plongeant, directement dans le liquide, une source de chaleur formée par une enveloppe cylindrique métallique contenant un produit chauffant. L'enveloppe cylindrique est introduite dans le liquide par le goulot de la gourde et elle est prolongée par des moyens d'actionnement disposés à l'extérieur de la gourde et destinés à initier une réaction exothermique du produit chauffant. Un tel mode de chauffage est, cependant, peu efficace car la transmission de chaleur entre l'enveloppe et le liquide est réalisée par les parois de l'enveloppe de la source de chaleur.

### Objet de l'invention

L'invention a pour but un dispositif de chauffage d'un liquide remédiant à ces inconvénients.

Selon l'invention, ce but est atteint par les revendications annexées.

Plus particulièrement, ce but est atteint par le fait que la source de chaleur comporte un élément thermiquement conducteur plongé dans le produit chauffant et comportant une partie externe en saillie introduite dans le récipient lorsque la source de chaleur est fixée sur l'ouverture du récipient.

Selon un développement de l'invention, l'élément thermiquement conducteur est un caloduc ou un thermosiphon diphasique.

Selon un mode de réalisation préférentiel, la périphérie de la partie externe de l'élément thermiquement conducteur comporte des ailettes.

Selon une autre caractéristique de l'invention, la partie de l'élément thermiquement conducteur plongée dans le produit chauffant comporte à sa périphérie des ailettes.

L'invention a également pour but un procédé de chauffage d'un liquide au moyen d'un tel dispositif de chauffage, plus particulièrement lorsque le récipient ne comporte qu'une seule ouverture, facile à mettre en oeuvre, fiable et pas dangereux.

Selon l'invention, ce but est atteint par le fait que le procédé consiste successivement :
- à fixer de manière étanche la source de chaleur sur l'ouverture du récipient,
- à retourner le dispositif de chauffage assemblé de manière à ce que le récipient soit placé au-dessus de la source de chaleur,
- et à déclencher les moyens d'actionnement.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés dans lesquels:
La figure 1 est une représentation schématique, en coupe, d'un récipient d'un dispositif de chauffage selon l'invention.
La figure 2 est une représentation schématique, en coupe, d'une source de chaleur d'un dispositif de chauffage selon l'invention.
La figure 3 représente un dispositif de chauffage selon l'invention et comportant un récipient selon la figure 1 assemblé sur une source de chaleur selon la figure 2.

### Description de modes particuliers de réalisation

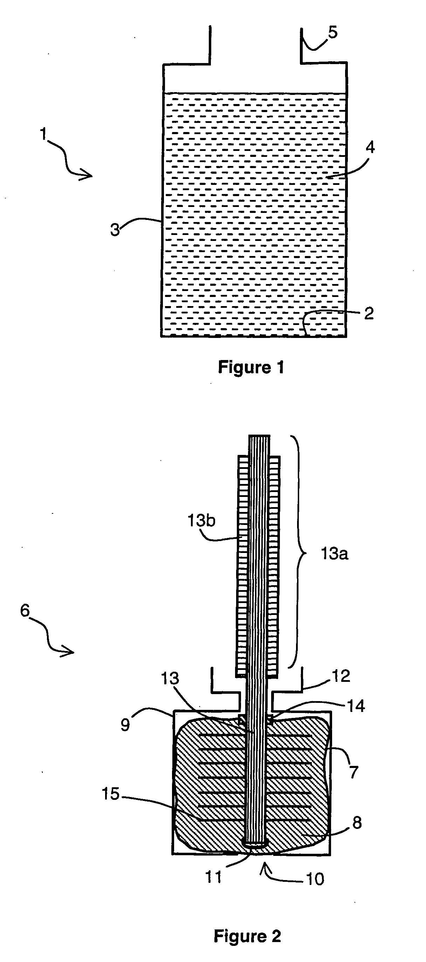

Selon un mode de réalisation particulier représenté aux figures 1 à 3, un dispositif de chauffage d'un liquide utilisé dans le domaine de l'alimentation, par exemple du lait, du café ou de l'eau, comporte un récipient 1, comme représenté à la figure 1. Le récipient 1 comporte un fond 2 et une paroi latérale 3 délimitant un espace destiné à contenir un liquide 4 et prolongée, dans sa partie supérieure, par une ouverture 5 telle qu'un goulot par exemple. Le goulot 5 peut, par exemple, comporter sur sa périphérie externe, un filetage destiné à coopérer avec un bouchon.

Le dispositif de chauffage comporte, également, une source de chaleur 6 telle que celle représentée à la figure 2 et destinée à coopérer avec le récipient 1. La source de chaleur 6 comporte une enveloppe 7 contenant un produit chauffant 8 et des moyens d'actionnement destinés à initier une réaction exothermique du produit chauffant. Le produit chauffant 8 est, par exemple, constitué par une solution aqueuse d'un sel maintenu à l'état de surfusion, tel que l'acétate de sodium trihydraté et les moyens d'actionnement permettent d'initier une cristallisation exothermique du sel. Le volume et la masse de la source de chaleur 6 sont, de préférence, définis en fonction de la masse de liquide à chauffer et en fonction des caractéristiques thermiques de la source de chaleur. A titre d'exemple, il est préférable d'utiliser 0,130 kg de solution aqueuse d'acétate de sodium trihydraté pour augmenter de 20°C, la température de 0,2 litre d'eau.

Le fait de pouvoir utiliser, comme produit chauffant, une solution aqueuse d'un sel maintenu à l'état de surfusion présente l'avantage de pouvoir être régénéré, une fois la réaction exothermique terminée. Ceci permet d'utiliser la source de chaleur indéfiniment sans avoir de problème lié au réapprovisionnement de la source de chaleur. De plus, l'amorçage du chauffage est facile à mettre en oeuvre car un simple actionnement mécanique, à un emplacement particulier, suffit pour déclencher la réaction exothermique. Enfin, la température de la réaction exothermique ne peut pas dépasser la valeur de 55°C, évitant, ainsi, un chauffage trop élevé du liquide risquant de provoquer des brûlures.

L'enveloppe 7, qui peut être souple, est, de préférence, disposée dans une enceinte 9 comportant une paroi à travers laquelle les moyens d'actionnement sont accessibles. Ainsi, comme représentée à la figure 2, l'enceinte 9 comporte un fond muni d'une ouverture 10 permettant d'accéder à un actionneur mécanique monostable 11, disposé dans l'enveloppe 7 et destiné à initier la réaction exothermique du produit chauffant. L'enceinte 9 comporte, également, dans sa partie supérieure, un orifice 12 ayant une forme complémentaire à celle du goulot 5 du récipient 1 et comportant, de préférence, un filetage interne permettant de visser la source de chaleur 6 sur le goulot 5 du récipient 1. L'orifice 12 de l'enceinte 9 permet, ainsi, la fixation de la source de chaleur 6 sur le goulot 5 du récipient 1, lors de l'assemblage du dispositif de chauffage.

L'enceinte 9 permet, notamment, de protéger l'enveloppe 7 des chocs externes et d'assurer le maintien de l'ensemble du dispositif de chauffage, lors de son fonctionnement. Elle permet également d'assurer une isolation thermique de la source de chaleur 6 par rapport à l'environnement extérieur. Ceci évite des pertes thermiques tout en protégeant l'utilisateur contre la chaleur dégagée.

Le transfert de chaleur entre la source de chaleur 6 et le liquide 4 contenu dans le récipient 1, une fois la source de chaleur 6 fixée sur le goulot du récipient 1, est assuré par l'intermédiaire d'un élément thermiquement conducteur 13. L'élément thermiquement conducteur 13, solidaire de la source de chaleur 6, comporte une partie plongée dans le produit chauffant 8, par exemple dans une solution aqueuse d'un sel maintenu à l'état de surfusion et une partie externe 13a (figure 2). La partie externe 13a fait saillie vers l'extérieur et elle est destinée à être introduite dans le récipient 1 lorsque la source de chaleur 6 est fixée sur le goulot 5 du récipient. L'enveloppe 7 comporte, alors, un orifice traversé, de façon étanche, par l'élément thermiquement conducteur et l'étanchéité de l'enveloppe 7 est, par exemple, assurée par un joint 14. Le joint 14 peut être dynamique ou statique et disposé autour de l'élément thermiquement conducteur, au niveau de l'orifice de l'enveloppe 7.

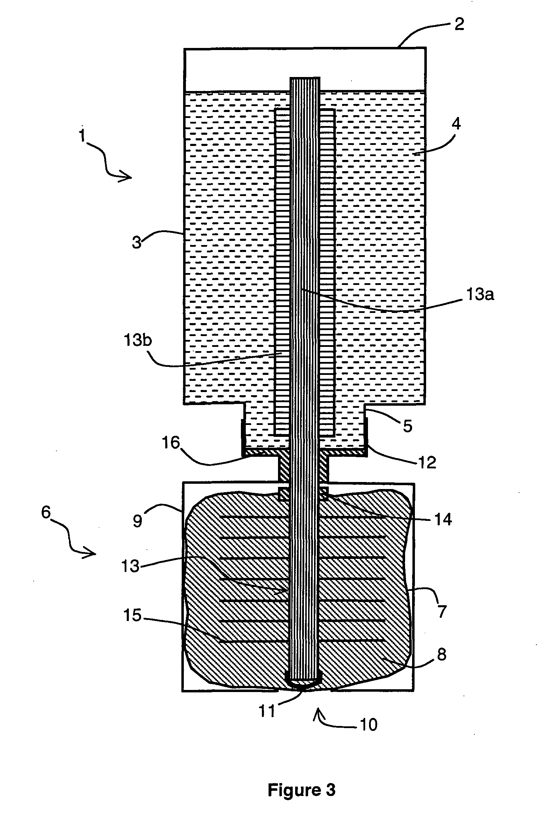

Comme représenté aux figures 2 et 3, l'élément thermiquement conducteur 13 peut, par exemple, être un caloduc, c'est-à-dire un tube rempli partiellement par un liquide et sa vapeur, ou bien un thermosiphon diphasique. Dans le cas d'un caloduc, la chaleur est transférée de la partie chaude à la partie froide du tube, par vaporisation de la phase liquide et condensation de la vapeur dans la partie froide. Ainsi, la partie externe 13a de l'élément thermiquement conducteur 13, faisant saillie vers l'extérieur, correspond à la partie froide du caloduc tandis que le reste du tube, plongé dans le produit chauffant, correspond à la partie chaude du caloduc.

La périphérie de la partie externe 13a de l'élément thermiquement conducteur 13 peut comporter des ailettes 13b destinées à favoriser les échanges thermiques entre l'élément thermiquement conducteur 13 et le liquide 4 à chauffer. Les ailettes 13b sont, de préférence, orientées de manière à favoriser les mouvements de convection naturelle du liquide.

La longueur de la partie de l'élément thermiquement conducteur 13 immergée dans le produit chauffant 8 est la plus importante possible, de manière à optimiser l'échange thermique entre le produit chauffant et l'élément thermiquement conducteur 13, lors de la réaction exothermique. L'échange thermique entre le produit chauffant et l'élément thermiquement conducteur 13 peut également être amélioré par des ailettes 15 disposées à la périphérie de la partie de l'élément thermiquement conducteur immergée dans le produit chauffant 8. Les ailettes peuvent également être remplacées par un matériau poreux.

L'actionneur mécanique 11 permettant de déclencher la réaction exothermique du produit chauffant est, de préférence, disposé en regard de l'extrémité de la partie de l'élément thermiquement conducteur 13 plongée dans le produit chauffant 8. L'extrémité de l'élément thermiquement conducteur 13 forme alors un appui pour l'actionneur. L'actionneur peut, par exemple, être fixé par clipsage ou bien être grippé à l'extrémité de la partie de l'élément thermiquement conducteur 13.

Comme illustré à la figure 3, un tel dispositif de chauffage est utilisé pour chauffer un liquide. La source de chaleur 6 est fixée sur le goulot 5 du récipient 1 contenant le liquide, par exemple par vissage, de manière à introduire la partie externe 13b de l'élément thermiquement conducteur 13 dans le récipient 1. Une fois le dispositif de chauffage assemblé, l'enveloppe 7 de la source de chaleur 6, comportant le produit chauffant, est, ainsi, disposée à l'extérieur du récipient 1. Le transfert de chaleur depuis l'enveloppe 7 vers le liquide contenu dans le récipient 1 est alors réalisé au moyen de l'élément thermiquement conducteur 13 plongé dans le produit chauffant 8 et dont la partie externe en saillie 13a est introduite dans le récipient 1 lorsque la source de chaleur 6 est fixée sur le goulot 5 du récipient 1.

Dans un mode particulier de réalisation, le dispositif de chauffage, ainsi assemblé, peut être retourné de manière à ce que le récipient 1 soit placé au-dessus de la source de chaleur 6. Dans ce cas, la source de chaleur 6 est préalablement fixée, de manière étanche, sur le goulot 5. L'étanchéité est, par exemple, assurée par un joint plat 16 disposé dans l'orifice 12 de l'enceinte 9. Une telle disposition favorise le transfert de chaleur de la partie chaude vers la partie froide de l'élément thermiquement conducteur, notamment dans le cas où l'élément thermiquement conducteur est constitué par un thermosiphon diphasique.

Les moyens d'actionnement sont, ensuite, déclenchés pour initier la réaction exothermique du produit chauffant et provoquer le chauffage de la partie de l'élément thermiquement conducteur plongée dans le produit chauffant. L'élément thermiquement conducteur transfère, alors, la chaleur vers la partie externe 13a, puis au liquide 4 contenu dans le récipient 1.

Un procédé de chauffage au moyen d'un tel dispositif présente l'avantage d'être facile à mettre en oeuvre, pas dangereux et fiable. De plus, dans le dispositif de chauffage, l'élément thermiquement conducteur est solidaire de la source de chaleur et il n'est introduit que temporairement dans le récipient, par le goulot. Ceci permet de chauffer le liquide de manière homogène, efficace et contrôlable, tout en permettant d'utiliser une même source de chaleur pour plusieurs récipients, de différents types ou de différences contenances. De plus, le volume utile en liquide dans le récipient n'est pas réduit, de manière permanente, par l'élément thermiquement conducteur.

Par ailleurs, l'utilisation d'une source de chaleur contenant un produit chauffant tel qu'une solution aqueuse d'un sel en surfusion permet d'obtenir un dispositif de chauffage autonome et susceptible d'être transporté. En effet, la source de chaleur est peu sensible aux chocs et aux vibrations et elle est capable de se régénérer.

L'invention n'est pas limitée au mode de réalisation décrit ci-dessus. En effet, le fond 2 du récipient 1 peut également être muni d'une ouverture, de manière, par exemple, à faciliter le nettoyage du récipient 1. Ainsi, la source de chaleur 6 peut être fixée sur l'ouverture du fond 2 du récipient 1 au lieu d'être fixée sur le goulot 5. L'ouverture du fond 2 du récipient 1 permet alors d'introduire la partie externe en saillie (13a) de l'élément thermique conducteur 13 dans le récipient (1).

## Revendications

1. Dispositif de chauffage d'un liquide comportant :
- un récipient (1) muni d'au moins une ouverture (5) et contenant ledit liquide (4),
- une source de chaleur (6) comportant une enveloppe (7) contenant un produit chauffant (8),
- des moyens de fixation de la source de chaleur (6) sur l'ouverture (5) du récipient (1)
- et des moyens d'actionnement (11) destinés à initier une réaction exothermique du produit chauffant,
dispositif **caractérisé en ce que** la source de chaleur (6) comporte un élément thermiquement conducteur (13) plongé dans le produit chauffant (8) et comportant une partie externe en saillie (13a) introduite dans le récipient (1) lorsque la source de chaleur (6) est fixée sur l'ouverture (5) du récipient (1).

2. Dispositif selon la revendication 1, **caractérisé en ce que** l'élément thermiquement conducteur (13) est un caloduc.

3. Dispositif selon la revendication 1, **caractérisé en ce que** l'élément thermiquement conducteur (13) est un thermosiphon diphasique.

4. Dispositif selon l'une quelconque des revendications 1 à 3, **caractérisé en ce que** la périphérie de la partie externe (13a) de l'élément thermiquement conducteur (13) comporte des ailettes (13b).

5. Dispositif selon l'une quelconque des revendications 1 à 4, **caractérisé en ce que** la partie de l'élément thermiquement conducteur (13) plongée dans le produit chauffant (8) comporte à sa périphérie des ailettes (15).

6. Dispositif selon l'une quelconque des revendications 1 à 4, **caractérisé en ce que** la partie de l'élément thermiquement conducteur (13) plongée dans le produit chauffant (8) comporte à sa périphérie un matériau poreux.

7. Dispositif selon l'une quelconque des revendications 1 à 6, **caractérisé en ce que** le produit chauffant (8) est constitué par une solution aqueuse d'un sel maintenu à l'état de surfusion.

8. Dispositif selon la revendication 7, **caractérisé en ce que** le sel est de l'acétate de sodium trihydraté.

9. Dispositif selon l'une quelconque des revendications 1 à 8, **caractérisé en ce que** la source de chaleur (6) comporte une enceinte (9) dans laquelle est disposée l'enveloppe (7) contenant le produit chauffant, les moyens d'actionnement (11) étant accessibles à travers une paroi de l'enceinte (9).

10. Dispositif selon l'une quelconque des revendications 1 à 9, **caractérisé en ce que** les moyens de fixation sont des moyens de fixation étanche.

11. Procédé de chauffage d'un liquide au moyen d'un dispositif de chauffage selon l'une quelconque des revendications 1 à 10 et dans lequel le récipient (1) ne comporte qu'une seule ouverture (5), **caractérisé en ce qu'**il consiste successivement :
- à fixer de manière étanche la source de chaleur (6) sur l'ouverture (5) du récipient (1),
- à retourner le dispositif de chauffage assemblé de manière à ce que le récipient (1) soit placé au-dessus de la source de chaleur (6),
- et à déclencher les moyens d'actionnement (11).
